# EUROPÄISCHE PATENTSCHRIFT

(11) **EP 0 500 583 B1**
(45) Veröffentlichungstag und Bekanntmachung des Hinweises auf die Patenterteilung: **03.05.1995**
(21) Anmeldenummer: 90915768.7
(22) Anmeldetag: 26.10.1990
(51) Int. Cl.: H04N 9/28, H04N 17/04

(54) **EINRICHTUNG ZUR RASTERKORREKTUR IN EINEM FERNSEHGERÄT**
GRID-CORRECTION DEVICE FOR A TV SET
DISPOSITIF DE CORRECTION DE LA TRAME POUR POSTES DE TELEVISION

(30) Priorität: 04.11.1989 DE 3936792
(43) Veröffentlichungstag der Anmeldung: 02.09.1992
(73) Patentinhaber: Deutsche Thomson-Brandt GmbH, 78003 Villingen-Schwenningen (DE)
(72) Erfinder: GLEIM, Günter, D-7730 Villingen (DE); CHAUVIN, Jacques, D-7733 Mönchweiler (DE)
(74) Vertreter: Einsel, Robert, Dipl.-Ing.
(86) Internationale Anmeldenummer: EP9001905
(87) Internationale Veröffentlichungsnummer: WO9107057

(56) Entgegenhaltungen:
- GB-A- 2 166 028
- Patent Abstracts of Japan, Band 10, Nr. 27 (E-378)(2084), 4. February 1986; & JP-A-60185482 (HITACHI SEISAKUSHO K.K.) 20. September 1985
- Patent Abstracts of Japan, Band 8, Nr. 49 (E-230)(1486), 6. März 1984; & JP-A-58201486 (MATSUSHITA DENKI SANGYO K.K.) 24. November 1983

## Beschreibung

Die Erfindung geht aus von einer Einrichtung zur Rasterkorrektur in einem Fernsehgerät gemäß dem Oberbegriff des Anspruchs 1. Unter Fernsehgerät wird dabei jegliche Art der rasterweisen elektronischen Bildwiedergabe verstanden, also die Wiedergabe eines über Rundfunk empfangenen Fernsehbildes durch ein Antennensignal oder auch ein Monitor, der von einem RGB-Signal, einem FBAS-Signal oder einem in Leuchtdichtesignal und Farbträger getrennten Signal von einem beliebigen Videosignalgeber gespeist ist.

Eine derartige Einrichtung dient grundsätzlich zur Korrektur von Parametern in der Rasterablenkung, z.B. zur Korrektur von Nord/Süd-, Ost/West-Verzeichnungen, Kissenverzeichnungen, für Nichtlinearitäten in der Ablenkung und sonstige Geometriefehler in horizontaler und vertikaler Richtung. Ein besonderes Anwendungsgebiet ist die Konvergenzkorrektur bei einem Fernseh-Projektionsgerät, bei dem die monochromatischen Bilder von drei Bildröhren auf eine Bildfläche projiziert werden.

Für die Beurteilung des jeweiligen Ablenkparameters für einen bestimmten Punkt des Bildes und die Ermittlung der zugehörigen Korrekturwerte ist es bekannt, mit einem eingeblendeten Cursor jeweils bestimmte Kreuzungspunkte des Gittermusters zu markieren. Der Cursor zeigt also den Bildpunkt an, für den im Augenblick durch entsprechende Einstellungen die Korrektur vorgenommen werden und die Korrekturwerte gespeichert werden können.

Durch das Ablenkraster wird auf einer Bildfläche ein sichtbares Bild dargestellt. Außerhalb des dargestellten Bildes erfolgt durch entsprechende Dunkeltastung keine Bildwiedergabe, wobei jedoch die Ablenkung des Elektronenstrahls auch während der Dunkeltastzeiten weiterläuft. Es ist daher möglich, den Cursor auf einen Kreuzungspunkt einzustellen, der zwar durch das Ablenkraster definiert ist, aber außerhalb des sichtbaren Bildes liegt. Der Cursor würde dann den Randbereich des Bildes markieren, in dem die Kontrolle und Korrektur des Parameters erfolgen kann. Anderseits ist aber der Cursor außerhalb des Bildes nicht mehr sichtbar. Der Cursor könnte also an sich zur Markierung einer Bildstelle und somit zur Ermittlung der Korrekturwerte dienen. Der Cursor ist jedoch "irgendwo versteckt", so daß der Bedienende nicht weiß, welcher Bildbereich markiert ist. Es ist zwar denkbar, den Cursor jeweils kurz wieder in das Bild hinein zu legen, dann wieder auf den außerhalb des Bildes liegenden Kreuzungspunkt einzustellen und sich die Stelle zu merken. Das ist aber wegen der Feinheit des Gittermusters und der Vielzahl der Kreuzungspunkte sehr mühsam und bringt die Gefahr von Fehleinstellungen.

Die Einstellung der Konvergenz erfolgt folgendermaßen: Der Cursor C wird durch manuelle Betätigung einer Bedienungseinheit auf einen bestimmten Kreuzungspunkt K eingestellt. Dadurch ist dieser Kreuzungspunkt markiert. Jetzt werden bei Betrachtung des Bildes die optimalen Werte für eine einwandfreie Konvergenz im Bereich dieses Kreuzungspunktes eingestellt. Das bedeutet, daß sich die von den drei Farbbildröhren in Rot, Grün und Blau geschriebenen Raster im Bereich dieses Kreuzungspunktes optimal decken und eine weiße waagerechte und senkrechte Linie auf dem Bildschirm erzeugen. Durch eine weitere manuelle Betätigung werden jetzt die eingestellten optimalen Korrekturwerte für die Rasterkorrektur in einem Speicher abgelegt. Dieser Speicher enthält fortan die jeweiligen Korrekturwerte für die Ablenkung, aber nur für diesen Kreuzungspunkt. Auf diese Weise werden für alle Kreuzungspunkte nacheinander die Korrekturwerte ermittelt und in Speichern abgelegt. Bei der Wiedergabe eines farbigen Bildes werden somit jedesmal alle diese Korrekturwerte nacheinander für die Kreuzungspunkte aus den Speichern abgerufen und bewirken über die Zeilenablenkung und die Bildablenkung mit entsprechender Interpolation zwischen den Kreuzungspunkten die jeweilige Korrpktur des Rasters, insbesondere der Konvergenz. Diese Art der Korrektur ist auch beschrieben in der im internationalen Recherchenbericht genannten GB-A-2 166 028.

Der Erfindung liegt die Aufgabe zugrunde, auch dann eine unbeeinträchtigte Kontrolle des Ablenkparameters und Ermittlung der Korrekturwerte zu ermöglichen, wenn sich der Cursor auf einem Kreuzungspunkt außerhalb des sichtbaren Bildes befindet.

Diese Aufgabe wird durch die im Anspruch 1 angegebene Erfindung gelöst. Vorteilhafte Weiterbildungen der Erfindung sind in den Unteransprüchen angegeben.

Der Cursor kann von sich aus so groß sein, z.B. ein rechtwinkliges symmetrisches Kreuz mit gleich langen Armen darstellen, daß er auch von dem außerhalb des Bildes liegenden Kreuzungspunkt mit einem Arm in das sichtbare Bild hineinragt. Diese Lösung hat den Vorteil, daß der Cursor an allen Bildkanten die gleiche Form haben kann und nicht berücksichtigt werden muß, an welcher Bildseite der Cursor steht. Es ist auch möglich, die Form des Cursors dann zu ändern, wenn der Cursor auf einem Kreuzungspunkt außerhalb des Bildes steht. Vorzugsweise hat der Cursor dann eine unsymmetrische Form mit einem entsprechend derart langen Teil, z.B. einen langen Arm eines Kreuzes, daß er mit diesem Teil jeweils in das Bild hineinragt.

Die Erfindung wird anhand der Zeichnung erläutert.

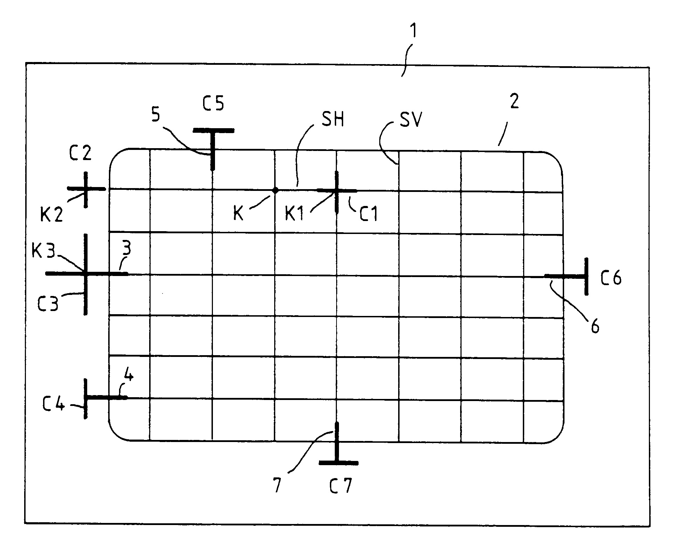

Die Figur zeigt eine Bildfläche 1, auf der durch ein Ablenkraster ein Bild 2 geschrieben wird. Außerhalb des Bildes 2 sind die Strahlen dunkel getastet und die Bildfläche nicht belichtet. Innerhalb des Bildes 2 ist ein Gittermuster aus waagerechten Linien SH und senkrechten Linien SV abgebildet, das eine Vielzahl von Kreuzungspunkten K bildet. Außerdem wird ein Cursor C abgebildet, der sprungartig auf die einzelnen Kreuzungspunkte K einstellbar ist. Der Cursor C markiert den Kreuzungspunkt K, für den jeweils die Konvergenz eingestellt werden und die Korrekturwerte gespeichert werden können. Der dargestellte Cursor C1 ist auf den Kreuzungspunkt K1 eingestellt.

Der dargestellte Cursor C2 ist auf den Kreuzungspunkt K2 eingestellt. Dieses ist am linken Bildrand der erste Kreuzungspunkt außerhalb des sichtbaren Bildes 2. Eine Einstellung der Konvergenz und die Speicherung der Korrekturwerte ist für diese Cursorstellung durchaus sinnvoll, und zwar für den linken Bildrand in der Höhe von K2. Andererseits ist aber der Cursor C2 durch seine Lage außerhalb des Bildes 2 nicht mehr sichtbar.

Der auf den Kreuzungspunkt K3 eingestellte Cursor C3 hat an sich die gleiche Form wie der Cursor C2. Die Arme des gebildeten Kreuzes sind jedoch so lang, daß der Cursor C3 mit dem Arm 3 in das Bild 2 hineinragt. Der Bedienende erkennt jetzt, daß er die Konvergenz in dem durch den Cursor C3 markierten linken Randbereich des Bildes einstellen kann. Der Cursor C3 kann über den ganzen Umfang des Bildes 2 dieselbe Form haben, weil er stets mit einem seiner vier langen Arme in das Bild 2 hineinragt.

Der Cursor C4 hat nur einen langen Arm, der auf den Bildrand gerichtet ist und in das Bild 2 zu Markierung der betreffenden Bildstelle hineinragt. Entsprechend ragt der Cursor C5 am oberen Bildrand mit dem Arm 5, der Cursor C6 am rechten Bildrand mit dem Arm 6 und der Cursor C7 am unteren Bildrand mit dem Arm 7 jeweils in das Bild 2 hinein. Die Cursor C4, C5, C6, C7 können auch nur aus den entsprechenden, in das Bild 2 hineinragenden Armen 4, 5, 6, 7 bestehen, weil der jeweils parallel zu Bildkante liegende andere Arm ohnehin außerhalb des Bildes 2 liegt und unsichtbar bleibt.

## Patentansprüche

1. Einrichtung für die Rasterkorrektur in einem Fernsehgerät, bei der auf der Bildfläche (1) innerhalb eines sichtbaren Bildes (2) ein Gittermuster aus waagerechten und senkrechten Linien (SH, SV) und ein auf die Kreuzungspunkte (K) der Linien einstellbarer Cursor (C) abgebildet werden und die Bildfläche (1) einen das sichtbare Bild (2) rahmenartig umgebenden Randbereich mit Dunkeltastung des Elektronenstrahls aufweist, dadurch gekennzeichnet, daß der Cursor (C) eine solche Form und Größe hat, daß er bei Einstellung auf den ersten Kreuzungspunkt (K3) im Randbereich außerhalb des sichtbaren Bildes (2) mit einem Teil (3 - 7) noch in das sichtbare Bild (2) hineinragt.

2. Einrichtung nach Anspruch 1, dadurch gekennzeichnet, daß der Cursor (C3) die Form eines rechtwinkligen Kreuzes mit vier gleich langen Armen hat und die Länge der Arme (3) größer ist als der Abstand des ersten Kreuzungspunktes (K3) außerhalb des sichtbaren Bildes (2) vom Rand des Bildes.

3. Einrichtung nach Anspruch 1, dadurch gekennzeichnet, daß der Cursor (C) außerhalb des sichtbaren Bildes (2) jeweils eine andere Form hat als innerhalh des sichtbaren Bildes (2).

4. Einrichtung nach Anspruch 3, dadurch gekennzeichnet, daß der Cursor (C) jeweils einen längeren Abschnitt (3 - 7) aufweist, der in Richtung des Bildrandes weist und in das sichtbare Bild (2) hineinragt.

## Claims

1. Apparatus for the screen correction in a television device in which, for the screen correction, a lattice design made of horizontal and vertical lines (SH,SV) and a cursor (C) which can be adjusted onto the crossing points (K) of the lines are mapped onto a picture area (1) within a visible picture (2) and the picture area (1) has an edge region with suppression of the electron beam to produce darkness which surrounds the visible picture like a frame characterized in that the cursor (C) is of such a size and shape that when it is set onto the first crossing point (K3) in the edge region outside the visible picture (2), a part (3 to 7) of it still projects into the visible picture (2).

2. Apparatus according to claim 1, characterized in that the cursor (C3) is shaped as a rightangled cross with four arms of equal length and the length of the arms (3) is larger than the distance of the first crossing point (K3) outside the visible picture (2) from the edge of the picture (2).

3. Apparatus according to claim 1, characterized in that the form of the cursor (C) outside the visible picture (2) is always different from that within the visible picture (2).

4. Facility according to claim 3, characterized in that the cursor (C) always has a longer section (3 to 7) which points in the direction of the picture edge and projects into the visible picture (2).

## Revendications

1. Dispositif de correction de trame dans un téléviseur, dans lequel un réseau composé de lignes horizontales et verticales (SH, SV) et un curseur (C) réglable sur un point d'intersection des lignes sont imagés à l'intérieur d'un champ visible (2) dans une zone d'image (1) et où ladite zone d'image (1) comprend une zone périphérique à extinction du faisceau électronique qui encadre le champ visible (2), caractérisé en ce que le curseur (C) présente des dimensions et une forme telles qu'en cas de pointage du premier point d'intersection (K3) dans la zone périphérique en dehors du champ visible (2), un de ses éléments (3 - 7) pénètre encore dans le champ visible (2).

2. Dispositif selon la revendication 1, caractérisé par le fait que le curseur (C3) présente la forme d'une croix perpendiculaire à quatre grands bras et que la longueur des bras (3) est plus grande que la distance séparant le premier point d'intersection (K3) en dehors du champ visible (2) du bord de l'image.

3. Dispositif selon la revendication 1, caractérisé par le fait que le curseur (C) adopte toujours à l'extérieur du champ visible (2) une autre forme qu'à l'intérieur du champ visible (2).

4. Dispositif selon la revendication 3, caractérisé par le fait que le curseur (C) présente toujours un élément plus long (3 - 7) dirigé vers le bord de l'image et pénétrant dans le champ visible (2).
